# EUROPÄISCHE PATENTSCHRIFT

(11) **EP 2 158 619 B1**
(45) Veröffentlichungstag und Bekanntmachung des Hinweises auf die Patenterteilung: **03.04.2013**
(21) Anmeldenummer: 08736226.5
(22) Anmeldetag: 15.04.2008
(51) Int. Cl.: H02N 2/06, H02N 2/02

(54) **PIEZOELEKTRISCHES ANTRIEBSSYSTEM, SOWIE VERFAHREN ZUM BETREIBEN EINES SOLCHEN**
PIEZOELECTRIC DRIVE SYSTEM, AND METHOD FOR THE OPERATION THEREOF
SYSTÈME D'ACTIONNEMENT PIÉZOÉLECTRIQUE ET PROCÉDÉ DE MISE EN OEUVRE CORRESPONDANT

(30) Priorität: 07.05.2007 DE 102007021335
(43) Veröffentlichungstag der Anmeldung: 03.03.2010
(73) Patentinhaber: Robert Bosch GmbH, 70442 Stuttgart (DE)
(72) Erfinder: HAUSSECKER, Walter, 77830 Buehlertal (DE); RIEGER, Vincent, 76139 Karlsruhe (DE); RISCHMUELLER, Volker, 71229 Leonberg (DE); GUENTHER, Dirk, 55270 Jugenheim (DE); FROEHLICH, Peter, Changsha Hunan 410100 (CN)
(86) Internationale Anmeldenummer: PCT/EP2008/054534
(87) Internationale Veröffentlichungsnummer: WO 2008/135351

(56) Entgegenhaltungen:
- EP-A- 0 712 170
- EP-A- 1 091 074
- EP-A- 1 098 429
- DE-A1-102005 030 135

## Beschreibung

### Stand der Technik

Die Erfindung geht aus von einem piezoelektrischen Antriebssystem zum Verstellen beweglicher Teile, insbesondere am Kraftfahrzeug nach der Gattung des unabhängigen Anspruchs.

Mit der EP 1 091 074 B1 ist ein Fenstersystem bekannt geworden, bei dem das Fenster mittels eines Antriebsmittels verstellt wird, das einen Piezoantriebsbetätiger umfasst. Der Piezoantriebsbetätiger weist ein Piezoelement auf, das das Fenster entlang eines Führungsmittels mittels des Piezowechseleffekts bewegt. Das Antriebsmittel weist hierbei als Sensor einen Messwertgeber auf, der der elektrischen Steuereinheit einen Messwert für die Antriebskraft zukommen lässt, der auch für eine Einklemmschutzvorrichtung verwendet werden kann. Ein solcher Sensor hat jedoch den Nachteil, dass er unabhängig vom Piezoantrieb, bzw. von dessen Anregungsmodus arbeitet, und daher zusätzlicher Auswertungsaufwand notwendig ist. Außerdem lässt sich für bestimmte Einklemmsituationen keine ausreichende Sensibilität erreichen, da der Sensor nicht auf die Betriebsweise des Piezoantriebs abgestimmt ist.

### Offenbarung der Erfindung

### Vorteile der Erfindung

Das erfindungsgemäßes Verfahren zum Betreiben eines piezoelektrischen Antriebsystems und das piezoelektrische Antriebsystem mit den Merkmalen der unabhängigen Ansprüche haben demgegenüber den Vorteil, dass ein Antwortsignal des Piezoaktors, der zur Ausübung einer Antriebskraft auf das bewegliche Teil eingesetzt wird, zur Detektion einer Laständerung des Antriebssystems genutzt werden kann. Dabei wird der Piezoaktor einerseits mittels eines Anregungssignals für den Verstellbetrieb angesteuert, so dass das Antwortsignal des Piezoaktors einerseits vom Anregungssignal des Piezoaktors abhängig ist, und andererseits die Antwort des Gesamtsystems auf das Anregungssignal, erfasst. Dadurch wird eine sehr schnelle und genaue Laständerung des beweglichen Teils erfasst, wodurch eine sehr zuverlässige Einklemmschutzfunktion gewährleistet ist. Dabei kann die Information des Antwortsignals ebenso für die Regelung des Antriebssystems ausgewertet werden. Durch die doppelte Nutzung des Piezoaktors als Antrieb und als Sensor entfällt die Verwendung eines zusätzlichen Detektors und dessen elektrische Versorgung, so dass die Anzahl der Bauteile deutlich reduziert wird, was zu einer Reduzierung des Gewichts führt.

Durch die in den abhängigen Ansprüchen aufgeführten Maßnahmen sind vorteilhafte Weiterbildungen und Verbesserungen der in den unabhängigen Ansprüchen angegebenen Ausführungen möglich. Zum Verstellen des Teils wird der Piezoaktor mittels eines Anregungssignals zur Ausführung einer Verstellbewegung angeregt. Wird nun in diesem normalen Anregungsbetrieb des Piezoaktors gleichzeitig das Antwortsignal detektiert, liegt die Information über die Laständerung des Teils ohne Zeitverzögerung vor. Wird das Antwortsignal ebenfalls zur Regelung des Verstellsystems verwendet, sind für die Einklemmschutzfunktion keinerlei zusätzliche Bauteile notwendig, so dass der Piezoaktor gleichzeitig als Antriebsmittel und Lastsensor wirkt. Zur Auswertung des Antwortsignals wird ein Modell zu Grunde gelegt, das das piezoelektrische Antriebssystem abbildet. Dabei kann das System als Schwingkreis angesehen werden, wobei die Änderung des Antwortsignals durch eine Änderung der Komponenten des Schwingkreises abgebildet werden.

In einer weiteren Ausführung der Erfindung wird der normale Anregungsbetrieb des Piezoaktors kurzzeitig unterbrochen, um das Antwortsignal des Antriebsystems auf das Anregungssignal des Piezoaktors zu erfassen. Dies hat den Vorteil, dass das Antwortsignal nicht vom Anregungssignal separiert werden muss, wodurch auch noch ein empfindlicheres Antwortsignal detektierbar ist. Da die Unterbrechung des Anregungsbetriebs im Millisekunden-Bereich liegt, wirken sich die einzelnen kurzeitige Unterbrechungen auf den Verstellbetrieb nicht störend aus.

Besonders günstig ist es, für die Lastdetektion die Amplitude des Stromsignals, bzw. deren Änderung zu messen. Dabei kann vorteilhaft die Amplitude der Anregungsspannung beispielsweise auf ihrem maximalen Wert konstant gehalten werden. Hierbei stellt die Änderung der Stromamplitude eine Vergleichsgröße dar, die zur Erkennung eines Einklemmfalls mit einem Grenzwert verglichen werden kann.

Alternativ kann auch die Amplitude der Spannung zur Erkennung der Laständerung gemessen werden, wobei vorzugsweise die maximale Amplitude des Anregungsstroms konstant gehalten wird.

Da der Piezoaktor vorzugsweise bei einer bestimmten Resonanzfrequenz als Anregungssignal betrieben wird, kann als Antwortsignal auch eine Änderung dieser Anregungsfrequenz durch eine Laständerung des Systems detektiert werden. Dabei stellt eine Verschiebung dieser Anregungsfrequenz des Strom-/Spannungssignals ein Maß für die Laständerung dar.

Zur Detektion der Laständerung kann dem Piezoaktor ein spezielles Testsignal zugeführt werden und daraufhin das Antwortsignal des Antriebssystems detektiert werden, wobei beispielsweise die Stromamplitude, oder die Spannungsamplitude, oder die Frequenzänderung gemessen werden kann. Als Testsignal eignet sich insbesondere eine Sprungfunktion, eine bestimmte Peak-Form oder ein Rampen-Verlauf der Einhüllenden des hochfrequenten Anregungssignals.

In einer weiteren Ausführung wird nach dem Abschalten des normalen Anregungssignal die Dämpfung des Piezoaktors aufgrund dessen Abklingverhalten erfasst, um die Last des zu verstellenden Teils zu detektieren.

Alternativ kann beim Start des Anregungsbetriebs das Einschwingverhalten des Piezoaktors detektiert werden, um die aufzubringende Antriebskraft zu erfassen. Um eine höhere Empfindlichkeit der Lastdetektion zu erzielen, kann während des normalen Verstellbetriebs der Piezoaktor in einem anderen Arbeitspunkt angeregt werden. Dieser Arbeitspunkt kann beispielsweise eine vom normalen Anregungsbetrieb abweichende Anregungsfrequenz oder Strom - bzw. Spannungsamplitude des Anregungssignals aufweisen, um an diesem Arbeitspunkt ein stärkeres Antwortsignal des Verstellsystems zu erzielen. Dadurch kann bei der Verwendung desselben Piezoaktors dieser einerseits auf den Verstellbetrieb, und andererseits auf den Sensorbetrieb optimiert werden.

Zur Auslösung des Einklemmschutzes, beispielsweise einem Stoppen oder Reversieren des beweglichen Teils, wird das Antwortsignal - bzw. dessen Änderung über die Zeit oder über den Verstellweg - kontinuierlich mit einem Grenzwert verglichen. Dieser Grenzwert kann emperisch ermittelt werden und/oder durch einen Lernprozess aufgrund der Änderung der vorherigen Verstellvorgänge ermittelt werden.

Durch die Ansteuerung jeweils nur eines Piezoaktors eines Piezomotors wird dessen Ansteuerungselektronik wesentlich vereinfacht. Das Schwingverhalten des Piezomotors wird nur durch die eine einzige Anregungsfrequenz bestimmt, so dass die Bewegungsbahn des Stößels einfach vorgebbar ist. Bei äußeren Einflüssen, wie beispielsweise einer Laständerung, die die Resonanzfrequenz verstimmen, kann die Resonanzfrequenz wesentlich einfacher mit einer einphasigen Anregung nachgeführt werden. Der nicht angeregte Piezoaktor kann außerdem gleichzeitig als Einklemmschutz- bzw. Lastsensor genutzt werden, der eine mechanische Krafteinwirkung durch das zu verstellende Teil in ein elektrisches Sensorsignal umwandelt. Beispielsweise weist der Piezomotor exakt zwei Piezoaktoren auf. Diese können günstiger Weise derart betrieben werden, dass jeweils ein Piezoaktor für eine Bewegungsrichtung der Relativbewegung angeregt wird. Dies hat den Vorteil, dass immer nur exakt ein Piezoaktor mittels der Elektronikeinheit in Schwingung versetzt wird, und der zweite Piezoaktor lediglich als träge Masse mitschwingt. Dadurch wird eine komplizierte Überlagerung der beiden gleichzeitig angeregten Piezoaktor-Schwingungen unterbunden.

Durch den Betrieb der Piezoaktoren in ihrer Resonanzfrequenz wird deren Piezokeramik optimal ausgenutzt. Dadurch lässt sich bei relativ geringem Materialeinsatz der Piezokeramik große Auslenkung des Piezoaktors erzeugen, wodurch ein großer Vorschub, beziehungsweise ein großes Moment auf die korrespondierende Reibefläche übertragen werden kann. Durch den Resonanzbetrieb wird die Piezokeramik im Punkt ihrer höchsten Effizienz betrieben, wodurch die elektrische Verlustleistung stark reduziert wird und dadurch eine Erwärmung der Piezokeramik vermieden wird. Im Resonanzbetrieb wird die Piezokeramik, die Elektronikeinheit und die Spannungsquelle nicht mit einer Blindleistung belastet, wodurch die Elektronik einfacher ausgeführt werden kann und beispielsweise auf zusätzliche Schalter und Filterelemente verzichtet werden kann. Durch die Ausnutzung der Dielektrizität der Piezokeramik werden keine störenden elektromagnetischen Felder erzeugt, noch wird der Betrieb der Piezokeramik durch äußere Magnetfelder merklich beeinträchtigt. Beim Betrieb des Piezoaktors im Resonanzbetrieb, kann durch das Design des Piezoaktors die Amplitude und die Kraftübertragung des Piezoaktors an die korrespondierende Reibefläche angepasst werden. Aufgrund der hohen Leistungsdichte des Piezoaktors kann der Materialeinsatz der relativ kostenintensiven Piezokeramik reduziert werden, bzw. die Leistung des Piezoantriebs erhöht werden. Verglichen mit herkömmlichen Elektro-Motoren treten auch keine Anlaufströme oder Blockierströme auf, so dass ein deutlich höherer Wirkungsgrad des Piezoantriebs erzielt werden kann.

Gemäß einer Ausführung der erfindungsgemäßen Antriebsvorrichtung wird der Piezoaktor ausschließlich in Längsschwingungen versetzt, so dass nur Schwingungskomponenten entlang der Längsrichtung mit der größten Ausdehnung des Piezoaktors angeregt werden. Dazu werden die Piezokeramik und die Ausbildung des Gehäuses des Piezoaktors entsprechend optimiert. Ist die Längsrichtung des Piezoaktors im Ruhezustand im Wesentlichen senkrecht zur korrespondieren Reibefläche des Antriebelements ausgerichtet, so kann die Längsschwingung eines einzigen Piezoaktors effektiv in die eine oder die entgegen gesetzte Bewegungsrichtungen der Relativbewegung gegenüber der Reibefläche umgesetzt werden.

Wird die Piezokeramik des Piezoaktors in mehreren Schichten ausgebildet, zwischen denen Elektronen angeschlossen sind, lässt sich mit einer vorgegebenen Spannung eine größere Schwingungsamplitude erzeugen. Werden die Schichten quer zur Längsrichtung des Piezoaktors angeordnet, wird dadurch die Längsschwingung in Längsrichtung maximiert.

Aufgrund der Mikrostoßbewegung des Friktionselements gegenüber der korrespondierenden Reibefläche kann eine Relativbewegung erzeugt werden, ohne dass zusätzliche träge Massen in Bewegung gesetzt werden müssen. Durch eine geeignete Wahl der Reibpartner zwischen dem Friktionselement und der korrespondierenden Reibefläche kann die Schwingung des Piezoaktors sehr verlustarm und verschleißfest in eine Linearbewegung oder Rotationsbewegung eines Antriebelements umgesetzt werden. Zur Unterstützung der Kraftübertragung kann zusätzlich zum Reibschluss ein Formschluss - beispielsweise eine Mikroverzahnung - zwischen dem Friktionselement und der Reibefläche ausgebildet werden. Das Antriebselement mit der Reibefläche kann vorteilhaft als lineare Antriebsschiene oder als Rotorwelle ausgebildet werden. Durch die Haltekraft, mit dem das Friktionselement gegen die lineare Schiene oder den Rotationskörper gepresst wird, wird die tangentiale Bewegungskomponente des Friktionselements auf das Antriebselement übertragen. Besonders günstig ist es, den Piezomotor an dem beweglichen Teil zu befestigen, so dass sich dieser gegenüber einer ortsfesten Reibefläche mit dem beweglichen Teil wegbewegt. Beispielsweise kann der Piezomotor an einer Fensterscheibe befestigt werden, und sich entlang einer Reibefläche einer karosseriefesten Führungsschiene abstoßen.

Ausführungsbeispiele der Erfindung sind in den Zeichnungen dargestellt und in der nachfolgenden Beschreibung näher erläutert. Es zeigen
- Fig. 1: Eine erfindungsgemäße piezoelektrische Antriebsvorrichtung,
- Fig. 2: eine weitere Ausführung für einen Rotationsantrieb,
- Fig. 3: ein Piezoelement für den Einbau in den Piezoaktor gemäß Fig. 1,
- Fig. 4: eine schematische Darstellung zum Betreiben der Antriebsvorrichtung,
- Fig. 5: eine Resonanzkurve des Piezomotors und
- Fig. 6: eine Impedanzkurve für das piezoelektrische Antriebs-System, und
- Fig. 7: eine weiteres Ausführungsbeispiel einer Antriebsvorrichtung mit integriertem Lastsensor
- Fig. 8: eine Ausführung mit separat ausgebildetem Lastdetektor,
- Fig 9 und 10: zwei Darstellungen typischer Verläufe des Antwortsignals.

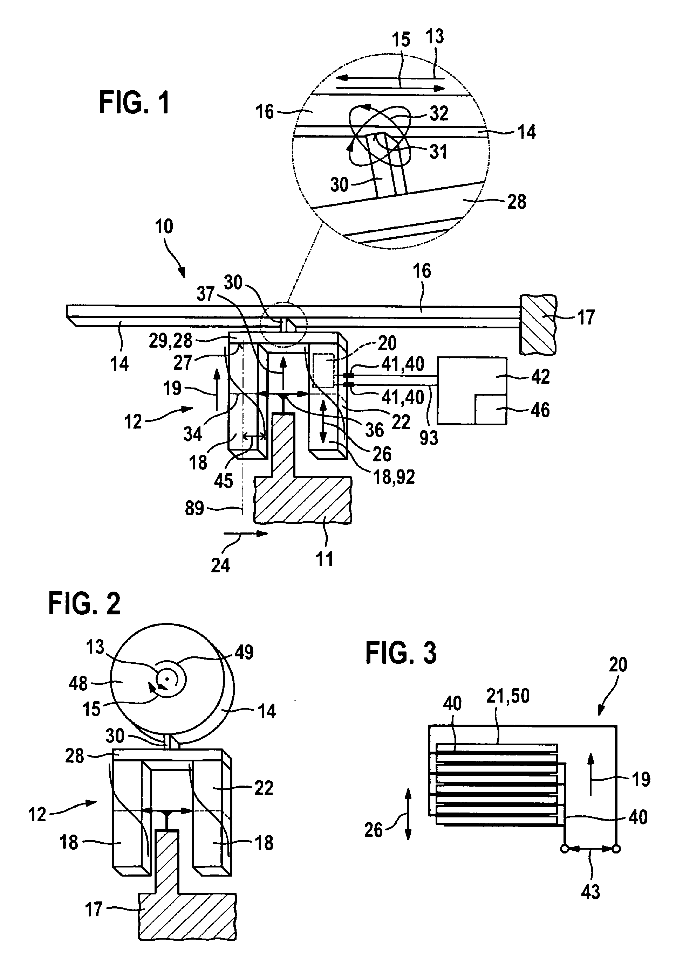

In Fig. 1 ist eine piezoelektrische Antriebsvorrichtung 10 dargestellt, bei der ein Piezomotor 12 eine Relativbewegung gegenüber einer korrespondierenden Reibefläche 14 ausführt. Die Reibefläche 14 ist hierbei als lineare Schiene 16 ausgebildet, die beispielsweise an einem Karosserieteil 17 befestigt ist. Der Piezomotor 12 weist mindestens einen Piezoaktor 18 auf, der wiederum ein Piezoelement 20 enthält. Hierzu weist der Piezoaktor 18 ein Aktorgehäuse 22 auf, das das Piezoelement 20 aufnimmt. Das Aktorgehäuse 22 ist beispielsweise hülsenförmig ausgebildet. In der dargestellten Ausführungen ist das Piezoelement 20 vom Aktorgehäuse 22 umschlossen. Der Piezoaktor 18 weist eine Längsrichtung 19 auf, in deren Richtung die Ausdehnungen des Piezoaktors 18 größer ist als in einer Querrichtung 24 dazu. Das Piezoelement 20 ist vorzugsweise im Aktorgehäuse 22 in Längsrichtung 19 vorgespannt, derart, dass bei einer Anregung einer Längsschwingung 26 des Piezoelements 20 in diesem keine Zugkräfte auftreten. Durch die Schwingung des Piezoelements 20 wird der gesamte Piezoaktor 18 in Längsschwingung 26 versetzt und überträgt eine Schwingungsamplitude 45 über einen Brückensteg 28 auf ein Friktionselement 30, das in Reibkontakt zur Reibefläche 14 steht. Durch die Längsschwingung 26 des Piezoaktors 18 wird der Brückensteg 28 in eine Kippbewegung oder eine Biegebewegung versetzt, so dass ein der Reibefläche 14 zugewandtes Ende 31 des Friktionselements 30 eine Mikrostoßbewegung ausführt. Die Wechselwirkung zwischen dem Friktionselement 30 und der Reibefläche 14 ist in dem vergrößerten Ausschnitt dargestellt, in dem ersichtlich ist, dass der Brückensteg 28, der in Ruhestellung näherungsweise parallel zur Reibefläche 14 angeordnet ist, bei angeregter Schwingung des Piezoaktors 18 gegenüber der Reibefläche 14 verkippt. Dabei führt das Ende 31 des Friktionselements 30 beispielsweise eine Ellipsenbewegung 32 aus, mittels derer sich der Piezomotor 12 entlang der linearen Schiene 16 abstößt. Der Piezomotor 12 ist im Bereich von Schwingungsknoten 34 der Piezoaktoren 18 gelagert und beispielsweise mit einem zu bewegenden Teil 11 verbunden. Gleichzeitig wird der Piezomotor 12 über eine Lagerung 36 mit einer Normalkraft 37 gegen die Reibefläche 14 gedrückt. Dadurch führt das Ende 31 des Friktionselements 30 nun eine Ellipsenbewegung 32 oder eine Kreisbewegung aus, die zusätzlich zur Normalkraft 37 eine tangentiale Kraftkomponente 38 aufweist, die den Vorschub des Piezomotors 12 gegenüber der Reibefläche 14 bewirkt. In einer alternativen Ausführung führt das Friktionselement 30 lediglich eine lineare Stoßbewegung unter einem gewissen Winkel zur Normalkraft 37 aus. Dadurch kommt es ebenfalls zu einer Relativbewegung mittels Mikrostößen.

Im Ausführungsbeispiel gemäß Fig. 1 weist der Piezomotor 12 genau zwei Piezoaktoren 18 auf, die beide näherungsweise parallel zu ihrer Längsrichtung 19 angeordnet sind. Dabei ist der Brückensteg 28 quer zur Längsrichtung 19 angeordnet und verbindet die beiden Piezoaktoren 18 an ihren Stirnseiten 27. Der Brückensteg 28 ist beispielsweise als ebene Platte 29 ausgebildet, in deren Mitte das Friktionselement 30 angeordnet ist. In einer bevorzugten Betriebsweise der piezoelektrischen Antriebsvorrichtung 10 wird für eine Relativbewegung in eine erste Richtung 13 nur einer der beiden Piezoaktoren 18 angeregt. Dabei wirkt der zweite, nicht angeregte Piezoaktor 18 über den Brückensteg 28 als Schwingmasse, aufgrund derer der Brückensteg 28 mit dem Friktionselement 30 gegenüber der Längsrichtung 19 verkippt oder verbogen wird. Entsprechend der Steifigkeit des Aufbaus des Piezomotors 12 wird somit die Längsschwingung 26 des Piezoelements 20 in eine Mikrostoßbewegung mit einer tangentialen Kraftkomponente 38 umgewandelt. Die elektrische Anregung des Piezoelements 20 erfolgt über Elektroden 40, die mit einer Elektronikeinheit 42 verbunden sind. Für eine Bewegung des Piezomotors 12 in die entgegen gesetzte Richtungen 15 wird entsprechend das Piezoelement 20 des anderen Piezoaktors 18 mittels der Elektronikeinheit 42 angeregt. Bei dieser Betriebsweise ist immer nur ein Piezoelement 20 des Piezomotors 12 angeregt, so dass es zu keiner Überlagerung von zwei Schwingungsanregungen beider Piezoaktoren 18 kommen kann.

Erfindungsgemäß wird die piezoelektrische Antriebsvorrichtung in ihrer Resonanzfrequenz 44 betrieben. Dazu weist die Elektronikeinheit 42 eine Abstimmschaltung 46 auf, die das entsprechende Piezoelement 20 derart ansteuert, dass das gesamte System in Resonanz schwingt. In Fig. 1 sind in den beiden Piezoaktoren 18 jeweils die Amplituden 45 der Resonanzfrequenz 44 der Längsschwingung 26 dargestellt, wobei die beiden Piezoaktoren 18 bei dieser Betriebsweise nicht gleichzeitig angeregt werden. Die maximalen Amplituden 45 entsprechen hier der mechanischen Resonanzfrequenz 44.

In Fig. 2 ist eine Variation der Antriebsvorrichtung 10 dargestellt, bei der der Piezomotor 12 in einem Karosserieteil 17 gelagert ist. Hingegen ist die Reibefläche 14 als Umfangsfläche eines Rotationskörpers 48 ausgebildet, so dass durch die Stößelbewegung des Friktionselements 30 der Rotationskörper 48 in Drehung versetzt wird. Entsprechend der zu Fig. 1 beschriebenen Betriebsweise kann die Drehrichtung 49 des Rotationskörpers 48 wiederum durch die Ansteuerung von jeweils nur einem Piezoelement 20 an einem der beiden Piezoaktoren 18 vorgegeben werden. Eine solche Antriebsvorrichtung 10 erzeugt eine Rotation als Antriebsbewegung und kann somit an Stelle eines Elektromotors mit nachgeschaltetem Getriebe eingesetzt werden.

In Fig. 3 ist vergrößert ein Piezoelement 20 abgebildet, wie es beispielsweise im Piezomotor 12 der Fig. 1 oder 2 verwendet werden kann. Das Piezoelement 20 weist mehrere voneinander getrennte Schichten 50 auf, zwischen denen die jeweiligen Elektroden 40 angeordnet sind. Wird an den Elektroden 40 über die Elektronikeinheit 42 eine Spannung 43 angelegt, dehnt sich das Piezoelement 20 in Längsrichtung 19 aus. Die Ausdehnung bzw. die Kontraktion der einzelnen Schichten 50 addiert sich auf, so dass durch die Anzahl der Schichten 50 die mechanische Gesamtamplitude 45 des Piezoelements 20 in Längsrichtung 19 vorgegeben werden kann. Die Schichten 20 sind dabei quer zur Längsrichtung 19 im Aktorgehäuse 22 angeordnet, so dass der gesamte Piezoaktor 18 durch das Piezoelement 20 in Längsschwingung 26 versetzt wird. Das Piezoelement 20 ist vorzugsweise so hergestellt, dass im Resonanzbetrieb des Piezoelements 20 sehr große Amplituden 45 erzeugbar sind.

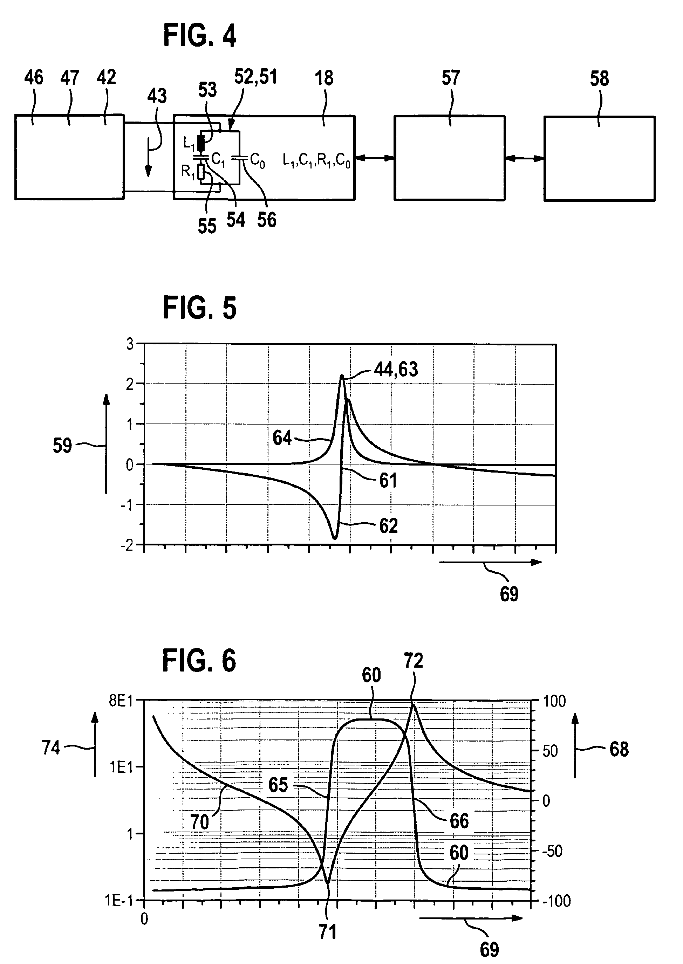

In Fig. 4 ist ein Modell der piezoelektrischen Antriebsvorrichtung 10 dargestellt, das als Grundlage zur Einstellung der Resonanzfrequenz 44 und zur Auswertung des Antwortsignals 130 zur Lastdetektion dient. Dabei ist der Piezoaktor 18 als Schwingkreis 52 dargestellt, in dem eine Induktivität 53 mit einer ersten Kapazität 54 und einer ohmschen Last 55 in Reihe geschaltet sind. Dazu ist eine zweite Kapazität 56 parallel geschaltet. An diesem Schwingkreis 52 wird eine Anregungsspannung 43 mittels der Elektronikeinheit 42 angelegt. Durch die Umwandlung der Längsschwingung 26 des Piezoaktors 18 in die Stößelbewegung des Friktionselements 30 wird die Resonanzfrequenz 44 des Piezoaktors 18 beeinflusst. Weiterhin hängt die Resonanzfrequenz 44 der gesamten Antriebsvorrichtung 10 von der Last 58 ab, die beispielsweise durch das Gewicht des zu verstellenden Teils 11 bestimmt wird. Weiterhin ist die Resonanzfrequenz 44 von der Ankopplung der Kraftübertragung 57 abhängig, die wesentlich durch die Reibbedingung zwischen dem Friktionselement 30 und der Reibefläche 14 bestimmt wird. Das Ersatzschaltbild in Figur 4 stellt in erster Näherung gleichzeitig das elektrische Klemmenverhalten des dynamischen piezoelektischen Antriebs 10 dar, wobei dieser beispielsweise im Bereich der Resonanzfrequenz 44 betrieben wird. Die Rückkopplung der Laständerung des zu verstellenden Teils 11 ist dabei von der Art der Kraftübertragung 57 abhängig, so dass das Antwortsignal 130 auf das Anregungssignal 93 von der Art der mechanischen Kopplung zwischen dem Piezoaktor 18 und dem zu verstellenden Teil 11 abhängt. Dabei kann das elektrische Klemmenverhalten gemäß den Ersatzschaltungen 51 auch für die Auswertung des Antwortsignals 130 durch das Einklemmschutzmodul 136 verwendet werden.

Gemäß diesem Ersatzschaltbild stellt sich bei der Anregung der Verstellvorrichtung 10 mittels der Elektronikeinheit 42 ein Frequenzgang ein, wie er in Fig. 5 dargestellt ist. Hierbei ist die Leistung 59 über der Frequenz 69 aufgetragen. Beim Null-Durchgang 61 der dargestellten Blindleistung 62 ergibt sich ein Maximum 63 der Wirkleistung 64. Das Maximum 63 der Wirkleistung 64 tritt bei der Resonanzfrequenz 44 auf, auf die die piezoelektrische Antriebsvorrichtung 10 mittels der Abstimmschaltung 46 geregelt wird. Die Resonanzfrequenz 44 liegt beispielsweise im Bereich zwischen 30 und 80 kHz, vorzugsweise zwischen 30 und 50 kHz.

In Fig. 6 ist das dazugehörige Impedanzverhalten des Piezomotors 12 über den Frequenzgang dargestellt. Der Phasenverlauf 60 der Impedanz der durch den Schwingkreis 52 gemäß Fig. 4 dargestellten Verstellvorrichtung 10 weist einen ersten Null-Durchgang 65 mit positiver Steigung und einen zweiten Null-Durchgang 66 mit negativer Steigung auf, die der Serien- und der Parallelresonanz des Schwingkreises 52 entsprechen. Der Phasenwinkel 68 ist auf der Y-Achse auf der rechten Seite des Diagramms dargestellt. Um die Antriebsvorrichtung 10 im Resonanzbetrieb zu halten - beispielsweise auch bei einer veränderlichen Last 58 - regelt die Abstimmschaltung 46 die Frequenz 69 beispielsweise auf den Null-Durchgang 65 mit positiver Steigung, was elektronisch relativ einfach mittels einer Phasenregelschleife 47 (PLL: Phase Locked Loop) realisierbar ist. Die linke Y-Achse 74 stellt den Betrag 70 der Impedanz dar, wobei der Impedanzverlauf 70 über der Frequenz 69 ein Minimum 71 am ersten Null-Durchgang 65 und ein Maximum 72 am zweiten Null-Durchgang 66 aufweist.

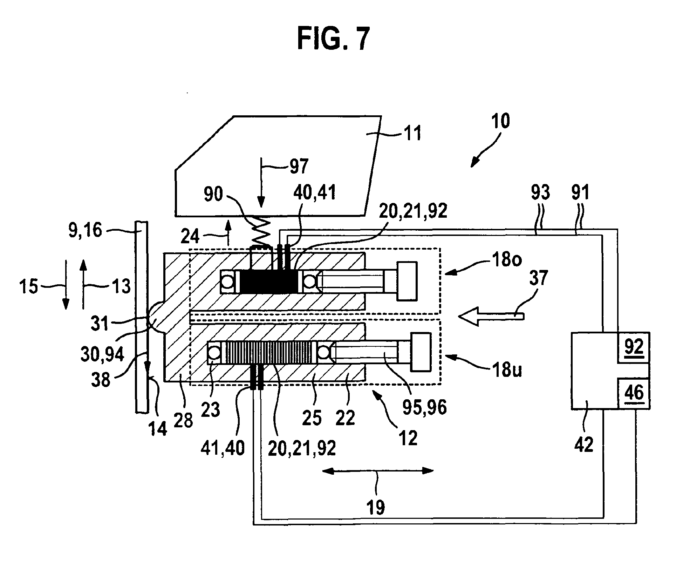

In Figur 7 ist ein weiteres Beispiel einer piezoelektrischen Antriebsvorrichtung 10 dargestellt, bei dem die lineare Schiene 16 als vertikale Führung 9 ausgebildet ist. Der Piezomotor 12 weist ebenso wie in Figur 1 und 2 zwei Piezoaktoren 18 auf, die in Längsrichtung 19 angeordnet sind. Die beiden Piezoaktoren 18 sind mittels eines Brückenstegs 28 miteinander verbunden, wobei dieser beispielsweise einstückig mit den beiden Aktorgehäusen 22 ausgebildet ist. Am Brückensteg 28 ist wiederum ein Friktionselement 30 ausgebildet, das mit seinem Ende 31 in Reibverbindung mit der Reibfläche 14 der linearen Schiene 16 steht. Das Friktionselement 30 ist hier beispielsweise als gewölbter Stößel 94 ausgebildet, der eine Mikrostoßbewegung gegenüber der Schiene 16 ausführt. Im Inneren der beiden Aktorgehäusen 22 ist als Piezoelement 20 jeweils eine Piezokeramik 21 angeordnet, die in Längsrichtung 19 eine größere Ausdehnung aufweist, als in der Querrichtung 24. Die Piezoelemente 20 sind in Längsrichtung 19 mechanisch vorgespannt, wozu diese innerhalb eines Hohlraums 23 mittels Spannelementen 95 festgeklemmt sind. Die Spannelemente 95 sind beispielsweise als Schrauben 96 ausgebildet, die direkt in ein Gewinde des Aktorgehäuses 22 einschraubbar sind. Die Antriebsvorrichtung 10 ist hier als Fensterheberantrieb ausgebildet, bei dem der Piezomotor 12 mit dem zu verstellenden Teil 11 verbunden ist, das hier als Scheibe ausgebildet ist. Zur Ausführung einer Relativbewegung in erster Bewegungsrichtung 13 (Heben) wird gemäß dieser Ausführung nur der untere Piezoaktor 18u mittels der Elektronikeinheit 42 angesteuert. Durch die Anregung des unteren Piezoelements 20 führt das Friktionselement 30 eine Stoßbewegung oder Ellipsenbewegung 32 bzw. Kreisbewegung aus, wodurch sich der Piezomotor 12 mittels einer tangentialen Kraftkomponente 38 entlang der ersten Bewegungsrichtung 13 abstößt. Aufgrund der mechanischen Hysterese des am Piezoaktor 18 angeordneten Brückenstegs 28 wird die angeregte Längsschwingung 26 in eine elliptische Bewegung des Stößels 94 umgewandelt, die entsprechend den Systemparametern von einer reinen Linearbewegung abweicht. Während der untere Piezoaktor 20 angeregt wird, wird an den oberen Piezoaktor 18o kein Anregungssignal 93 angelegt. Vielmehr übt das zu verstellende Teil 11 bei der Bewegung in Richtung 13 eine Kraft 97 in Querrichtung 24 auf das Piezoelement 20 des oberen Piezoaktors 18o aus. Dadurch wird das Piezoelement 20 in Querrichtung 24 mechanisch belastet, wodurch an den Elektroden 40 ein Sensorsignal 91 abgegriffen werden kann. Das Sensorsignal 91 wird in der Elektronikeinheit 42 ausgewertet, und beim Überschreiten einer vorgebbaren Schwelle kann dann der piezoelektrische Antrieb 10 gestoppt oder reversiert werden. Für das Absenken des zu verstellenden Teils 11 entlang der zweiten Bewegungsrichtung 15 wird dann nur der obere Piezoaktor 18o angeregt, ohne dass an den unteren Piezoaktor 18u ein Anregungssignal 93 angelegt wird. Auf diese Weise ist für jede Bewegungsrichtung 13, 15 jeweils nur ein Piezoaktor 18u, 18o angesteuert. Daher gibt es keine Überlagerung mehrerer Anregungssignale 93, wodurch der Piezomotor 12 immer nur einphasig angesteuert wird. Dabei kann für die Anregung des unteren Piezoaktors 18u und für die Anregung des oberen Piezoaktors 18o das identische Anregungssignal 93 verwendet werden, das durch die Abstimmschaltung 46 der Elektronikeinheit 42 generiert wird. Beim Absenken des beweglichen Teils 11 kann der untere Piezoaktor 18u wahlweise ebenfalls als Sensor 92 betrieben werden, wobei bei einem Fensterheberantrieb hierfür keine Notwendigkeit besteht, da beim Absenken keine Einklemmgefahr besteht. Somit kann mit einer einzigen Elektronikeinheit 42, mit einer einzigen Abstimmschaltung 46 zeitlich nacheinander entweder der untere Piezoaktor 18u zum Heben des Teils 11 oder der obere Piezoaktor 18u zum Senken des Teils 11 angesteuert werden. Die Lagerung des Piezomotors 12 ist in Figur 7 nicht näher dargestellt, kann aber beispielsweise ähnlich erfolgen wie in Figur 1. Dabei wird der Piezomotor 12 in Längsrichtung 19 mit einer Normalkraft 37 gegen die Reibefläche 14 gepresst. Das bewegliche Teil 11 ist mittels eines Verbindungselements 90 mit dem oberen Piezoaktor 18o verbunden, wobei das Verbindungselement 90 vorzugsweise direkt im Bereich des Piezoelements 20 angeordnet ist. Im Ausführungsbeispiel ist das Verbindungselement 90 elastisch ausgebildet, beispielsweise als Federelement, wobei durch deren Steifigkeit die Federrate für einen Einklemmschutz vorgebbar ist. Dadurch kann eingestellt werden, wie weiche Hindernisse noch detektiert werden können (z. B. Finger oder Hals). Im Ausführungsbeispiel ist das obere Piezoelement 20 mit einem geringeren Volumen als das untere Piezoelement 20 ausgebildet, da für das Absenken geringere Antriebskräfte notwendig sind, als für das Anheben des Teils 11 mittels des länger ausgebildeten unteren Piezoelements 20. In einer weiteren Variation der Erfindung kann das Piezoelement 20 für das Generieren eines Sensorsignals 91 auch in der gleichen Richtung mechanisch belastet werden, wie das Piezoelement 20 auch zum Antrieb des Teils 11 angeregt wird. Beispielsweise könnte das Teil 11 mittels eines Verbindungselements 90 derart mit dem oberen Piezoaktor 18o verbunden sein, dass das obere Piezoelement 20 mechanisch in Längsrichtung 19 belastet wird, um beispielsweise eine Sensorspannung zu erzeugen.

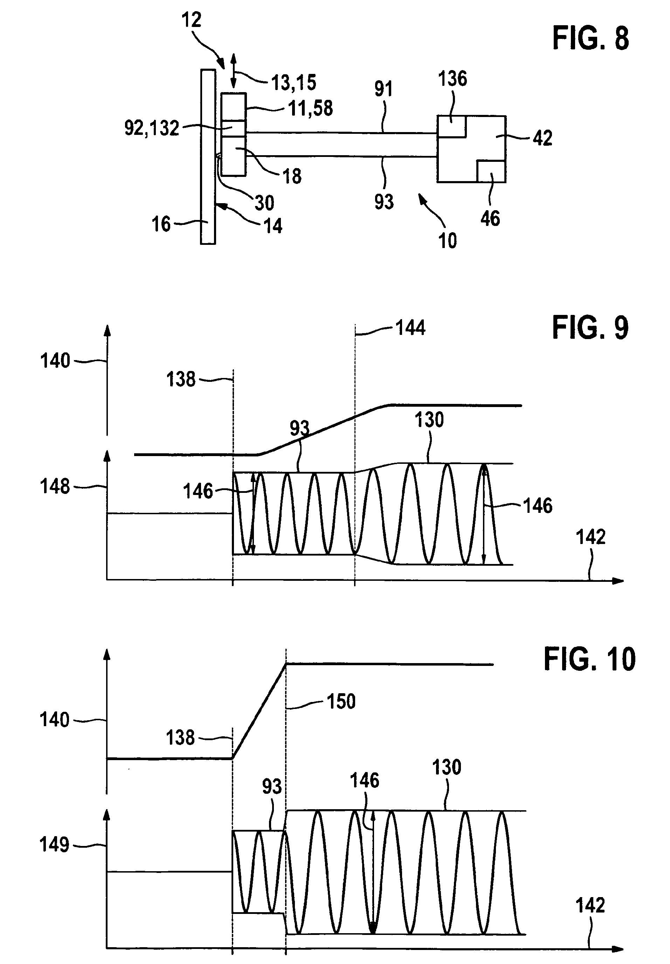

In Figur 8 ist eine alternative Ausführung dargestellt, bei dem der Sensor 92 als separat ausgebildeter Lastdetektor 132 ausgebildet ist. Dabei ist der Lastdetektor 132 zusätzlich zum Piezoaktor 18 am piezoelektrischen Antriebssystems 10 angeordnet, vorzugsweise zwischen dem verstellten Teil 11 und dem Piezoaktor 18. Der Lastdetektor 132 ist beispielsweise als Weg-, Geschwindigkeits- oder Beschleunigungssensor ausgebildet, dessen Sensorsignal 91 ausgewertet wird, um die Last des zu verstellenden Teils 11, bzw. die Verstellkraft zu ermitteln. Alternativ kann der Lastdetektor 132 direkt als Kraftsensor 134 ausgebildet sein, der als Sensorsignal 91 ein die Antriebskraft repräsentierendes Signal der Elektronikeinheit 42 zuführt. Die Elektronikeinheit 42 weist hierzu ein Einklemmschutzmodul 136 auf, in dem das Sensorsignal 91, oder eine daraus ermittelte Größe mit einem Grenzwert verglichen wird. Der Grenzwert ist beispielsweise in einem Speicher des Einklemmschutzmoduls 136 hinterlegt, beispielsweise als konstanter Wert, oder als Grenzwert-Kurve über die Zeit, bzw. über den Verstellweg. Wird der Grenzwert für den Einklemmschutz überschritten, gibt die Elektronikeinheit 42 ein entsprechendes Signal an den Piezoaktor 18, der den Verstellvorgang des Teils 11 stoppt oder reversiert.

In Figur 9 ist das Messdiagramm einer Laständerung schematisch dargestellt. Die obere Kurve zeigt den Verstellweg 140 auf der y-Achse über der Zeitachse 142 (x-Achse). Steigt die Last durch das zu verstellende Teil 11 allmählich an und geht in einem Bereich 144 kontinuierlich in einen Stillstand über, beispielsweise beim Einlauf einer Scheibe in einen Anschlag mit Dichtung, steigt das Antwortsignal 130 in diesem Bereich nur langsam an, und erreicht dann einen Bereich der Sättigung mit einer größeren konstanten Amplitude 146. In Figur 9 ist als Antwortsignal 130 beispielsweise auf der y-Achse der Strom 148 über der Zeit 142 (x-Achse) dargestellt. Zu Beginn des Verstellvorgangs zum Zeitpunkt 138 weist das Stromsignal 148 bei einer gleichmäßigen Verstellung des beweglichen Teils 11 eine konstante maximale Stromamplitude 146 auf, mit der der Piezoaktor 18 versorgt wird. Die Frequenz des Anregungssignals 93 liegt dabei beispielsweise im Bereich der Resonanzfrequenz 44 und ändert sich auch bei einer Veränderung der maximalen Amplitude nicht. Aufgrund der langsamen, allmählichen Änderung der maximalen Amplitude 146 über die Zeit 142 im Bereich 144 kann das Einklemmschutzmodul 136 erkennen, dass kein Einklemmfall vorliegt, sondern beispielsweise eine Lasterhöhung auf Grund einer Zunahme der Reibung des beweglichen Teils 11 in seiner Führungsschiene.

In Figur 10 ist hingegen ein Blockierfall dargestellt, bei dem die Einklemmschutzfunktion ausgelöst wird. Nach einem konstanten gleichmäßigen Verstellvorgang nach dem Startzeitpunkt 138 kommt es zum Zeitpunkt 150 zu einem plötzlichen Blockieren des zu verstellenden Teils 11, was beispielsweise zu einem sprungartigen Anstieg der maximalen Amplitude 146 des Antwortsignals 130 führt. In Figur 10 ist als Antwortsignal 130 auf der y-Achse die Anregungsspannung 149 dargestellt, die zum Blockierzeitpunkt 150 eine sehr schnelle Änderung der maximalen Amplitude 146 erfährt. Wird beispielsweise die zeitliche Änderung der maximalen Amplitude 146 des Antwortsignals 130 mit einem abgespeicherten Grenzwert verglichen, kann bei einem Überschreiten der Änderungsgeschwindigkeit des Antwortsignals 130 ein Einklemmfall erkannt werden und der Piezomotor 12 gestoppt oder reversiert werden.

In einer weiteren nicht dargestellten Ausführung kann als Antwortsignal 130 die Frequenz des Stroms 148 und der Spannung 149 gemessen werden, mittels derer ebenfalls eine Laständerung durch das zu verstellende Teil 11 detektiert werden kann. Dabei kann sich im Blockierfall im Ersatzschaltbild des Piezoantriebs 10 gemäß Figur 4 eine frequenzabhängige Komponente, beispielsweise die Induktivität 53, die erste Kapazität 54 oder die zweite Kapazität 56 ändern, wodurch sich die Resonanzfrequenz 44 des Verstellsystems 10 bei einer Laständerung verschiebt. Ändert sich durch die Laständerung beispielsweise nur der ohmsche Widerstand 55, bleibt wie in Figur 8 die Resonanzfrequenz 44 konstant und es ändert sich lediglich die Amplitude 146 des Antwortsignals 130, die einer Impedanzänderung gemäß der Figur 6 entspricht.

Es sei angemerkt, dass hinsichtlich der in den Figuren und der in der Beschreibung gezeigten Ausführungsbeispiele vielfältige Kombinationsmöglichkeiten der einzelnen Merkmale untereinander möglich sind. So kann beispielsweise die konkrete Ausbildung der Piezoaktoren 18, 8 deren Aktorgehäuse 22, der Piezolemente 20 (Monoblock, Stapel- oder, Multilyer), des Brückenstegs 28 und des Friktionselements 30 entsprechend der Anwendung variiert werden. Dabei kann die Stößelbewegung als lineare Stoßbewegung oder als im Wesentlichen elliptische oder kreisförmige Bewegungsbahn ausgebildet sein. Dabei stellt die reine lineare Stößelbewegung den Grenzfall der Ellipsenbewegung dar. Ebenso können bei mehr als zwei Piezoaktoren 18 die entsprechenden Schwingungen mehrerer Piezoaktoren eines Piezomotors 12 gleichzeitig angeregt werden, wodurch eine Überlagerung dieser Schwingungen eine Stößelbewegung bewirkt, die das Antriebselement in Bewegung versetzt. Dabei können die Piezoaktoren 18 einphasig oder mehrphasig betrieben werden. Das erfindungsgemäße Verfahren zur Erkennung der Laständerung ist nicht auf das Mikrostoßprinzip beschränkt, sondern kann auch auf quasistatisch arbeitende Antriebe, wie beispielsweise den Inchworm-Piezomotor übertragen werden. Bevorzugt wird die erfindungsgemäße Antriebseinheit 10 zu Verstellung beweglicher Teile 11 (Sitzteile, Fenster, Dach, Klappen) im Kraftfahrzeug verwendet, bei der der Piezomotor 12 mit der Bordnetzspannung betrieben werden kann, ist jedoch nicht auf eine solche Anwendung beschränkt. Dabei kann auch der Piezomotor 12 an der Karosserie befestigt werden, und die Reibefläche 14 mit dem zu verstellenden Teil 11, beispielweise einem Gurtbringer oder einer Kopfstütze, bewegt werden.

## Patentansprüche

1. Verfahren zum Betreiben eines piezoelektrischen Antriebssystems (10) zum Verstellen von beweglichen Teilen (12, 14), insbesondere im Kraftfahrzeug (17), mit mindestens einem Piezomotor (12), der mindestens einen Piezoaktor (18) aufweist, wobei mittels mindestens eines Friktionselements (30) des Piezomotors (12) eine Relativbewegung bezüglich einer dem Friktionselement (30) gegenüberliegenden Reibefläche (14) erzeugbar ist, wobei der mindestens eine Piezoaktor (18) mittels einer Elektronikeinheit (42) mit einem Anregungssignal (93) angesteuert wird, und ein Antwortsignal (130) des Antriebssystems (10) mittels des mindestens einen Piezoaktors (18) detektiert wird, wobei aufgrund einer Änderung des Antwortsignals (130) eine Laständerung des Antriebsystems (10) erkannt wird, **dadurch gekennzeichnet, dass** der Piezoaktor (18) derart ausgebildet ist, dass zur Auswertung des Antwortsignals (130) als Modell des piezoelektrischen Antriebs ein Ersatzschaltbild (51) aus einer Induktivität (53), einer Kapazität (54) und einem ohmschen Widerstand (55) zugrunde gelegt wird, die zueinander in Reihe geschaltet sind, wobei eine weitere Kapazität (56) hierzu parallel geschaltet ist, und die Änderung zumindest einer dieser Komponenten zur Bestimmung der Laständerung herangezogen wird.

2. Verfahren nach Anspruch 1, **dadurch gekennzeichnet, dass** das Antwortsignal (130) während eines normalen Anregungsbetriebs des mindestens einen Piezoaktors (18) zum Verstellen des Teils (12, 14) mittels dem angesteuerten Piezoaktor (18) gemessen wird.

3. Verfahren nach einem der Ansprüche 1 oder 2, **dadurch gekennzeichnet, dass** das Antwortsignal (130) nach Unterbrechung des normalen Anregungsbetriebs des Piezoaktors (18) zum Verstellen des Teils (12, 14) mittels dem angesteuerten Piezoaktor (18) gemessen wird.

4. Verfahren nach einem der vorhergehenden Ansprüche, **dadurch gekennzeichnet, dass** als Antwortsignal (130) des Systems (10) eine Stromamplitude (148) - insbesondere bei einer konstant gehaltenen Anregungsspannung-gemessen wird.

5. Verfahren nach einem der vorhergehenden Ansprüche, **dadurch gekennzeichnet, dass** als Antwortsignal (130) des Systems (10) eine Spannungsamplitude (149) - insbesondere bei einem konstant gehaltenen Anregungsstrom-gemessen wird.

6. Verfahren nach einem der vorhergehenden Ansprüche, **dadurch gekennzeichnet, dass** als Antwortsignal (130) des Systems (10) eine Verschiebung der Resonanzfrequenz (44) des Antriebssystems (10) gemessen wird.

7. Verfahren nach einem der vorhergehenden Ansprüche, **dadurch gekennzeichnet, dass** dem Piezoaktor (18) ein Testsignal als Anregungssignal (93) zugeführt wird und das Antwortsignal (130) des Systems (10) auf das Testsignal gemessen wird, wobei das Testsignal insbesondere als eine Sprungfunktion, ein Peak oder eine Rampe ausgebildet ist.

8. Verfahren nach einem der vorhergehenden Ansprüche, **dadurch gekennzeichnet, dass** nach der Unterbrechung des normalen Anregungsbetriebs des Piezoaktors (18) als Antwortsignal (130) ein Abklingverhalten des zuvor angeregten Piezoaktors (18) gemessen wird, um eine Laständerung des Antriebssystems (10) zu erkennen.

9. Verfahren nach einem der vorhergehenden Ansprüche, **dadurch gekennzeichnet, dass** als Antwortsignal (130) der Einschwingvorgang des Piezoaktors (18) beim normalen Anregungsbetrieb ausgewertet wird, um eine Laständerung des Antriebssystems (10) zu erkennen.

10. Verfahren nach einem der vorhergehenden Ansprüche, **dadurch gekennzeichnet, dass** der Piezoaktor (18) während des normalen, geregelten Anregungsbetriebs kurzzeitig in einem anderen - vom normalen Anregungsbetrieb abweichenden-Arbeitspunkt betrieben wird, der auf die Einflussgröße der Last optimiert ist, wobei insbesondere die Anregungsfrequenz und/oder die Amplitude des Anregungssignals (93) variiert wird, um eine Laständerung des Antriebssystems (10) zu erkennen

11. Verfahren nach einem der vorhergehenden Ansprüche, **dadurch gekennzeichnet, dass** ein Einklemmfall erkannt und der Piezomotor (12) gestoppt oder reversiert wird, wenn die Änderung des Antwortsignals (130) einen vorgebbaren Grenzwert überschreitet.

12. Verfahren nach einem der vorhergehenden Ansprüche, **dadurch gekennzeichnet, dass** dem Modell des piezoelektrischen Antriebs eine Last (58), die beispielsweise durch das Gewicht des zu verstellenden Teils (11) bestimmt wird, und die Ankopplung der Kraftübertragung 57 zugrunde gelegt wird, die wesentlich durch die Reibbedingung zwischen dem Friktionselement (30) und der Reibefläche (14) bestimmt wird.

13. Verfahren nach einem der vorhergehenden Ansprüche, **dadurch gekennzeichnet, dass** der Piezomotor (12) genau zwei Piezoaktoren (18) aufweist, wobei für eine erste Bewegungsrichtung (13) der Relativbewegung nur der eine Piezoaktor (18) und für die entgegengesetzte Bewegungsrichtung (15) nur der andere Piezoaktor (18) betätigt wird.

14. Verfahren zum Betreiben einer piezoelektrischen Antriebsvorrichtung (10) nach einem der vorhergehenden Ansprüche **dadurch gekennzeichnet, dass** der Piezomotor (12) im Bereich seiner Resonanzfrequenz (44) betrieben wird, indem eine Abstimmschaltung (46) auf den Nulldurchgang (61) des Phasenverlaufs oder ein Extrema der Impedanz (60) und/oder der Admitanz (Kehrwert der Impedanz) des Systems (10) regelt.

15. Piezoelektrische Antriebsvorrichtung (10) zur Ausführung des Verfahrens nach einem der vorhergehenden Ansprüche, **dadurch gekennzeichnet, dass** der Piezoaktor (18) eine Längsrichtung (19) aufweist, entlang der der Piezoaktor (18) eine größere Ausdehnung aufweist als in einer Querrichtung (24) dazu, und der Piezoaktor (18) mittels der Elektronikeinheit (42) in Längsschwingung (26)- insbesondere ausschließlich in Längsrichtung (19) ohne Querkomponenten - versetzt wird, wobei sich die Längsrichtung (19) des Piezoaktors (18) insbesondere näherungsweise senkrecht zur Reibefläche (14) erstreckt.

16. Piezoelektrische Antriebsvorrichtung (10) nach einem der vorhergehenden Ansprüche, **dadurch gekennzeichnet, dass** der Piezoaktor (18) eine Piezokeramik (21) mit mehreren getrennten Schichten (50) aufweist, zwischen denen Elektroden (40) angeordnet sind, wobei sich die Schichten (50) vorzugsweise quer zur Längsrichtung (19) des Piezoaktors (18) erstrecken.

## Claims

1. Method for operating a piezoelectric drive system (10) for adjusting movable parts (12, 14), in particular in a motor vehicle (17), having at least one piezo motor (12) which has at least one piezo actuator (18), wherein by means of at least one friction element (30) of the piezo motor (12) a relative movement with respect to a friction face (14) which lies opposite the friction element (30) can be generated, wherein the at least one piezo actuator (18) is actuated with an excitation signal (93) by means of an electronic unit (42), and a response signal (130) of the drive system (10) is detected by means of the at least one piezo actuator (18), wherein a change in load of the drive system (10) is detected on the basis of a change in the response signal (130), **characterized in that** the piezo actuator (18) is embodied in such a way that, in order to evaluate the response signal (130), an equivalent circuit diagram (51) composed of an inductor (53), a capacitor (54) and an ohmic resistor (55) which are connected in series with one another is used as the basis for a model of the piezoelectric drive, wherein one further capacitor (56) is connected in parallel therewith and the change in at least one of these components is used to determine the change in load.

2. Method according to Claim 1, **characterized in that** the response signal (130) is measured during a normal excitation operation of the at least one piezo actuator (18) in order to adjust the part (12, 14) by means of the actuated piezo actuator (18).

3. Method according to one of Claims 1 and 2, **characterized in that** after an interruption in the normal excitation operating mode of the piezo actuator (18) the response signal (130) is measured by means of the actuated piezo actuator (18) in order to adjust the part (12, 14).

4. Method according to one of the preceding claims, **characterized in that** a current amplitude (148) is measured, in particular at an excitation voltage which is kept constant, as a response signal (130) of the system (10).

5. Method according to one of the preceding claims, **characterized in that** a voltage amplitude (149), in particular in the case of an excitation current which is kept constant, is measured as a response signal (130) of the system (10).

6. Method according to one of the preceding claims, **characterized in that** a shift in the resonance frequency (44) of the drive system (10) is measured as a response signal (130) of the system (10).

7. Method according to one of the preceding claims, **characterized in that** a test signal is fed as an excitation signal (93) to the piezo actuator (18), and the response signal (130) of the system (10) in response to the test signal is measured, wherein the test signal is embodied, in particular, as a jump function, a peak or a ramp.

8. Method according to one of the preceding claims, **characterized in that** after the interruption in the normal excitation operating mode of the piezo actuator (18), a decay behaviour of the previously excited piezo actuator (18) is measured as a response signal (130) in order to detect a change in load of the drive system (10).

9. Method according to one of the preceding claims, **characterized in that** the transient recovery process of the piezo actuator (18) in the normal excitation operating mode is evaluated as a response signal (130) in order to detect a change in load of the drive system (10).

10. Method according to one of the preceding claims, **characterized in that** during the normal controlled excitation operating mode the piezo actuator (18) is briefly operated at another working point, which differs from the normal excitation operating mode and which is optimized to the influencing variable of the load, wherein, in particular, the excitation frequency and/or the amplitude of the excitation signal (93) are/is varied in order to detect a change in load of the drive system (10).

11. Method according to one of the preceding claims, **characterized in that** a case of trapping is detected and the piezo motor (12) is stopped or reversed if the change in the response signal (130) exceeds a predefinable limiting value.

12. Method according to one of the preceding claims, **characterized in that** a load (58), which is determined, for example, by the weight of the part (11) to be adjusted, and the force-transmitting coupling (57), determined substantially by the frictional condition between the friction element (30) and the friction face (14), is used as the basis for the model of the piezoelectric drive.

13. Method according to one of the preceding claims, **characterized in that** the piezo motor (12) has precisely two piezo actuators (18), wherein only the one piezo actuator (18) is activated for a first movement direction (13) of the relative movement, and only the other piezo actuator (18) is activated for the opposite movement direction (15).

14. Method for operating a piezoelectric drive device (10) according to one of the preceding claims, **characterized in that** the piezo motor (12) is operated in the range of its resonance frequency (44) **in that** a tuning circuit (46) adjusts to the zero crossing (61) of the phase profile or to an extreme of the impedance (60) and/or of the admittance (reciprocal value of the impedance) of the system (10).

15. Piezoelectric drive device (10) for carrying out the method according to one of the preceding claims, **characterized in that** the piezo actuator (18) has a longitudinal direction (19) along which the piezo actuator (18) has a greater extent than in a transverse direction (24) with respect thereto, and the piezo actuator (18) is offset by means of the electronic unit (42) in the longitudinal oscillation (26), in particular exclusively in the longitudinal direction (19) without transverse components, wherein the longitudinal direction (19) of the piezo actuator (18) extends, in particular, approximately perpendicularly with respect to the friction face (14).

16. Piezoelectric drive device (10) according to one of the preceding claims, **characterized in that** the piezo actuator (18) has piezo ceramics (21) with a plurality of separate layers (50) between which electrodes (40) are arranged, wherein the layers (50) preferably extend transversely with respect to the longitudinal direction (19) of the piezo actuator (18).

## Revendications

1. Procédé de mise en oeuvre d'un système d'actionnement piézoélectrique (10) permettant de régler des pièces mobiles (12, 14), notamment dans le véhicule automobile (17), à l'aide d'au moins un moteur piézoélectrique (12) comportant au moins un actionneur piézoélectrique (18), un déplacement relatif pouvant être réalisé par rapport à une surface de frottement (14) opposée à l'élément de frottement (30) à l'aide d'au moins un élément de frottement (30) du moteur piézoélectrique (12), l'au moins un actionneur piézoélectrique (18) pouvant être commandé à l'aide d'une unité électronique (42) par le biais d'un signal d'excitation (93) et un signal de réponse (130) du système d'actionnement (10) étant détecté à l'aide de l'au moins un actionneur piézoélectrique (18), une variation de charge du système d'actionnement (10) étant détectée du fait d'une modification du signal de réponse (130), **caractérisé en ce que** l'actionneur piézoélectrique (18) est réalisé de telle sorte que l'analyse du signal de réponse (130) comme modèle d'actionnement piézoélectrique utilise un schéma de connexion de remplacement (51), une inductivité (53), une capacité (54) et une résistance ohmique (55) connectés en série les uns par rapport aux autres, une capacité supplémentaire (56) étant connectée en sus en parallèle et la variation d'au moins un de ces composants étant utilisée pour déterminer la variation de charge.

2. Procédé selon la revendication 1, **caractérisé en ce que** le signal de réponse (130) est mesuré pendant un fonctionnement d'excitation normal de l'au moins un actionneur piézoélectrique (18) en vue de régler la pièce (12, 14) à l'aide de l'actionneur piézoélectrique (18) commandé .

3. Procédé selon l'une quelconque des revendications 1 ou 2, **caractérisé en ce que** le signal de réponse (130) est mesuré après l'interruption du fonctionnement d'excitation normal de l'actionneur piézoélectrique (18) en vue de régler la pièce (12, 14) à l'aide de l'actionneur piézoélectrique (18) commandé.

4. Procédé selon l'une quelconque des revendications précédentes, **caractérisé en ce que** le signal de réponse (130) mesuré du système (10) est une amplitude de courant (148) - notamment à une tension d'excitation maintenue constante.

5. Procédé selon l'une quelconque des revendications précédentes, **caractérisé en ce que** le signal de réponse (130) mesuré du système (10) est une amplitude de tension (149) - notamment à un courant d'excitation maintenu constant.

6. Procédé selon l'une quelconque des revendications précédentes, **caractérisé en ce que** le signal de réponse (130) mesuré du système (10) est un déplacement de la fréquence de résonance (44) du système d'actionnement (10).

7. Procédé selon l'une quelconque des revendications précédentes, **caractérisé en ce qu'**un signal de test servant de signal d'excitation (93) est amené à l'actionneur piézoélectrique (18) et que le signal de réponse (130) du système (10) au signal de test est mesuré, le signal de test prenant notamment la forme d'une fonction de saut, d'un pic ou d'une rampe.

8. Procédé selon l'une quelconque des revendications précédentes, **caractérisé en ce qu'**après l'interruption du fonctionnement d'excitation normal de l'actionneur piézoélectrique (18), le signal de réponse (130) mesuré est un comportement d'affaiblissement de l'actionneur piézoélectrique (18) précédemment excité permettant de détecter une variation de charge du système d'actionnement (10).

9. Procédé selon l'une quelconque des revendications précédentes, **caractérisé en ce que** le signal de réponse (130) du processus d'oscillation de l'actionneur piézoélectrique (18) est analysé en situation de fonctionnement d'excitation normal pour détecter une variation de charge du système d'actionnement (10).

10. Procédé selon l'une quelconque des revendications précédentes, **caractérisé en ce qu'**en situation de fonctionnement d'excitation normal réglé, l'actionneur piézoélectrique (18) est entraîné pendant un temps court dans un autre point de fonctionnement - s'écartant du mode d'excitation normal - ce point étant optimisé en fonction de la grandeur d'influence de la charge, la fréquence d'excitation et/ou l'amplitude du signal d'excitation (93) pouvant notamment varier pour permettre de détecter une variation de charge du système d'actionnement (10).

11. Procédé selon l'une quelconque des revendications précédentes, **caractérisé en ce qu'**un cas de coincement est détecté et que le moteur piézoélectrique (12) est arrêté ou inversé lorsque la variation du signal de réponse (130) dépasse une valeur limite pouvant être prédéfinie.

12. Procédé selon l'une quelconque des revendications précédentes, **caractérisé en ce que** le modèle d'actionnement piézoélectrique est une charge (58) déterminée par exemple par le poids de la pièce (11) à déplacer et le couplage servant à la transmission de force 57 déterminée pour l'essentiel par l'état de frottement observé entre l'élément de frottement (30) et la surface de frottement (14).

13. Procédé selon l'une quelconque des revendications précédentes, **caractérisé en ce que** le moteur piézoélectrique (12) comporte précisément deux actionneurs piézoélectriques (18), seul le premier actionneur piézoélectrique (18) étant actionné dans une première direction de déplacement (13) du déplacement relatif et seul l'autre actionneur piézoélectrique (18) étant actionné dans la direction de déplacement (15) opposée.

14. Procédé de mise en oeuvre d'un dispositif d'actionnement piézoélectrique (10) selon l'une quelconque des revendications précédentes, **caractérisé en ce que** le moteur piézoélectrique (12) est entraîné dans la plage de sa fréquence de résonance (44), un circuit de syntonie (46) étant réglé sur le passage à zéro (61) de la courbe des phases ou à un extrême de l'impédance (60) et/ou de l'admittance (valeur inversée de l'impédance) du système (10).

15. Dispositif d'actionnement piézoélectrique (10) permettant la mise en oeuvre du procédé selon l'une quelconque des revendications précédentes, **caractérisé en ce que** l'actionneur piézoélectrique (18) présente une direction longitudinale (19) le long de laquelle l'actionneur piézoélectrique (18) présente un étirement plus important que dans une direction transversale (24) et l'actionneur piézoélectrique (18) étant décalé dans son oscillation longitudinale (26) - notamment exclusivement dans la direction longitudinale (19) sans composantes transversales - par l'unité électronique (42), la direction longitudinale (19) de l'actionneur piézoélectrique (18) s'étendant notamment approximativement perpendiculairement à la surface de frottement (14).

16. Dispositif d'actionnement piézoélectrique (10) selon l'une quelconque des revendications précédentes, **caractérisé en ce que** l'actionneur piézoélectrique (18) comporte une céramique piézoélectrique (21) dotée de plusieurs couches (50) séparées entre lesquelles sont disposées des électrodes (40), les couches (50) s'étendant de préférence transversalement par rapport à la direction longitudinale (19) de l'actionneur piézoélectrique (18).
